# EUROPEAN PATENT SPECIFICATION

(11) **EP 4 208 007 B1**
(45) Date of publication and mention of the grant of the patent: **23.10.2024**
(21) Application number: 21777363.9
(22) Date of filing: 26.08.2021
(51) Int. Cl.: A01D 46/26

(54) **APPARATUS FOR HARVESTING SMALL FRUITS**
VORRICHTUNG ZUM ERNTEN KLEINER FRÜCHTEN
APPAREIL POUR RÉCOLTER DES PETIT FRUITS

(30) Priority: 04.09.2020 IT 202000021052
(43) Date of publication of application: 12.07.2023
(73) Proprietor: VIVARELLI, Alice, 40042 Lizzano in Belvedere (BO) (IT)
(72) Inventor: MATTAROZZI, Nicolò, 40038 Vergato (BO) (IT); VIVARELLI, Alice, 40042 Lizzano in Belvedere (BO) (IT)
(74) Representative: De Milato, Francesco
(86) International application number: PCT/IB2021/057805
(87) International publication number: WO 2022/049460

(56) References cited:
- EP-A2- 2 374 345
- EP-A2- 2 374 345
- WO-A1-2017/002047
- WO-A1-2017/002047
- WO-A2-2020/101591
- WO-A2-2020/101591
- GR-B- 1 008 857
- GR-B- 1 008 857

## Description

### Field of the invention

The present invention relates to an apparatus for harvesting small fruits, such as olives, almonds, pistachios and similar fruits.

Furthermore, the invention relates to a method for harvesting the aforementioned small fruits.

### Description of the prior art

Several apparatuses are known for shaking the branches of some plants by vibrating and/or rotating the same by rods, or fingers, of which they are provided with. In this way, the aforementioned apparatuses cause the small fruits, in particular olives, but also almonds, pistachios, coffee beans, etc. to fall down from the branches of the plants, in order to be collected.

An example of a similar apparatus is described in WO2007/129207. The apparatus comprises two comb-like members, each of which comprising an elongated base body and a plurality of rods which protrude from the same face. The base bodies are pivotally connected to a support by hinges having the same axis, therefore, the two comb-like members are arranged on parallel planes and facing with each other. In particular, in a determined relative position they are overlapped with each other, if viewed from one side. The apparatus is provided with an electric motor which causes the two comb-like members to oscillate by a motion transmission group. More precisely, the motion transmission group is arranged to cause an alternating rotational motion in opposite phases of the two comb-like members. The apparatus provides, furthermore, a pole having a first end fixed to the support and a second end having a handle to be grasped by a user. A drawback of the apparatus described above is the small working area that is generated by the movement of the comb-like members with respect to their size.

Another example of an apparatus for harvesting is described in WO2017/002047. In this case, the two comb-like members are positioned side by side in order to have a larger working area with respect to the previous case. Also in this case, the comb-like members are operated to move according to an alternative rotational motion in opposite phases with respect to each other about a respective axis. More in detail, a motion transmission group is provided which trasforms the continuous rotational motion provided by a motor, at first, into a reciprocating translational motion of a shaft and, then, into the alternative rotational motion of the comb-like members by two connecting rods hinged at one side to the end, and to the other to respective elongated bases of the comb-like members.

However, this apparatus is structurally complex and too much heavy owing to the kind of transmission that is used.

Still another example of an apparatus for harvesting fruits is described in EP3430883. In this case, analogously to the previous case, the two comb-like members are positioned side by side, but the motion transmission group provides two superimposed connecting rods hinged, at a first end to the same eccentric pivot, and at the other end to a respective elongated base element of one of the two comb-like members.

However, the superimposition of the two connecting rods provided by the motion transmission group described in EP3430883, unavoidably implies that the working head of the apparatus has a great thickness. This, during working conditions, obstructs the user's view impeding to see clearly the area involved by the shaking operation. Therefore, there is the risk to apply the shaking action with the comb-like members in areas without fruits, or even, on parts of the plant which shouldn't be involved because particularly fragile and that, therefore, would be unavoidably damaged.

Another apparatus for harvesting is described in GR1008857. In this case the apparatus comprises a first and a second oscillating element positioned side by side and respectively provided with a series of rods. The first and the second oscillating element are pivotally connected to a support body at respective fulcrum points. A motor is, furthermore, provided with a shaft on which a first gear wheel is mounted. This meshes with a second gear wheel in order to cause a rotational motion about a respective rotational shaft on which a third gear wheel is mounted. This latter, then, meshes with a fourth gear wheel connected to an end of the first connecting rod for causing the first oscillating element to oscillate. The fourth gear wheel, then, meshes with a fifth gear wheel connected to an end of the second connecting rod for causing the second oscillating element to oscillate. More precisely, the fourth and the fifth gear wheels are connected to respective ends of a respective connecting rod by a connection member comprising a respective pivot. The solution described in GR1008857 is, therefore, structurally complex in particular owing to the five gear wheels, which have problems of wear at the teeth that can cause over time the shaking action of the branches to be ineffective and, therefore, to make necessary to carry out a high number of maintenance operations to replace the same. Furthermore, also the solution of GR1008857 provides high overall dimensions not only along a plane orthogonal to the axes of the gear wheels, like the prior art solutions described above, but also to a high lateral dimension owing to the great number of gear wheels of the motion transmission group that mesh one with another with consequent problems when the apparatus is used for harvesting fruits between two branches of the plant to be shaked in particular owing to the high weight to be supported by the user. In addition to the above, the solution of GR1008857 have problems of penetration of dust, dirty, such as vegetable materials that are ground during the use of the apparatus that accumulate in particular between the fourth and the fifth gear wheel and the respective connection member providing the pivot actuating the connecting rods. Therefore, the apparatus described in GR1008857 needs to be subjected to frequent maintenance operations in order to remove by hands the external materials that, over time, accumulate between the different mechanical parts impeding the same from working correctly.

### Summary of the invention

It is, therefore, an object of the present invention to provide an apparatus for harvesting small fruits, such as olives, almonds, pistachios and similar fruits, which allows to overcome the aforementioned drawbacks of the prior art solutions.

It is, in particular, an object of the present invention to provide such an apparatus for harvesting small fruits, such as olives, almonds, pistachios and similar fruits, having a small thickness without reducing the effectiveness of the shaking action.

It is another object of the present invention to provide such an apparatus for harvesting small fruits, such as olives, almonds, pistachios and similar fruits, that is able to assure an effective shaking action over time, reducing, at the same time, the number of maintenance operations that are necessary with respect to the prior art solutions.

These and other objects are achieved by an apparatus, according to the invention, for harvesting small fruits, in particular olives, almonds, pistachios and similar fruits, said apparatus comprising:
- a handle portion at which a user is arranged to grasp said apparatus;
- a support body;
- a first and a second oscillating comb-like member pivotally connected to said support body at respective fulcrum points, said first and said second oscillating comb-like member being positioned side by side and comprising, respectively, a first and a second elongated base portion provided, respectively, with a first and a second plurality of rods;
- a motor group comprising a motor shaft on which a pinion is mounted that is operatively connected to the first and to the second oscillating comb-like member by a motion transmission group comprising a first and a second connecting rod member having a respective first end that is pivotally connected to a respective end portion of the elongated base portion, and to a respective second end arranged to connect said first and second connecting rod members respectively to a first and a second crank group comprising, respectively, a first and a second gear wheel arranged to mesh one with the other in such a way to be counter rotating;
whose main characteristic is that said pinion is arranged to directly mesh with said first gear wheel of said first crank group.

Other features of the invention and the related embodiments are set out in the dependent claims.

In particular, the aforementioned first ends of the first and of the second elongated base portion are arranged to face one another.

In particular, the first and the second crank group are respectively provided with a first and a second eccentric pivot arranged to pivotaly engage, respectively, into a first and into a second engagement hole provided at the second ends of the first and of the second crank group.

Advantageously, between the first and the second eccentric pivot and the first and the second engagement hole a first and a second auxiliary bearing are, respectively, provided.

In particular, each said first and second crank group can comprise a first part and a second part that are fixed at opposite sides to the first and to the second gear wheel. More in particular, the aforementioned first parts are provided with the first and the second eccentric pivot.

Advantageously, the aforementioned first parts and the aforementioned second parts are associated to respective bearings.

In particular, the aforementioned first and second oscillating comb-like members comprise, respectively, a first and a second directing body. More in particular, the first and the second directing body comprise, respectively, a first and a second plurality of tubular bodies operatively connected by a plurality of connection rods, each tubular body being arranged to house and direct along a predetermined direction a respective rod.

Advantageously, the first and the second plurality of tubular bodies are arranged to be engaged, respectively, to the first and to the second oscillating comb-like member.

### Brief description of the drawings

The invention will now be shown with the following description of its exemplary embodiments, exemplifying but not limitative, with reference to the attached drawings in which:
- Fig. 1 diagrammatically shows a side elevation perspective view of a first embodiment of an apparatus, according to the invention, for harvesting small fruits, during working conditions;

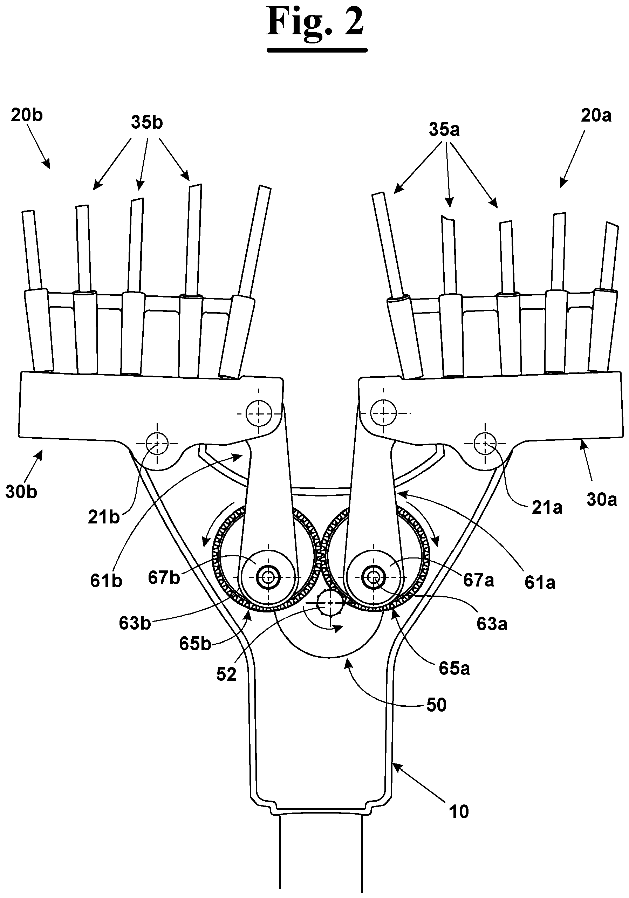

- Fig. 2 diagrammatically shows a plan view of the motion transmission group of which the apparatus for harvesting according to the invention is provided of, in a first working position;

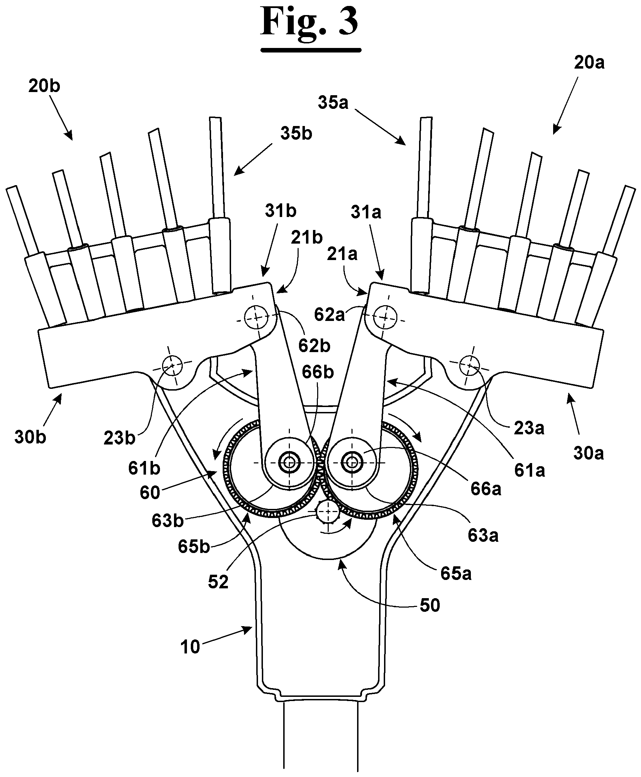

- Fig. 3 diagrammatically shows a plan view of the motion transmission group of figure 2 in a second working position;
- Fig. 4 diagrammatically shows a longitudinal cross section of the working head of the apparatus of figure 1;
- Fig. 5 diagrammatically shows a side elevational view of an embodiment of the motion transmission group of the apparatus for harvesting according to the present invention;
- Fig. 6 diagrammatically shows a transversal cross section of the crank group of figure 5 in order to highlight some technical characteristics;
- Fig. 7 diagrammatically shows a plan view of the main components of another embodiment of the apparatus, according to the invention, for harvesting small fruits, in particular olives, almonds, pistachios, etc.

### Detailed description of some exemplary embodiments of the invention

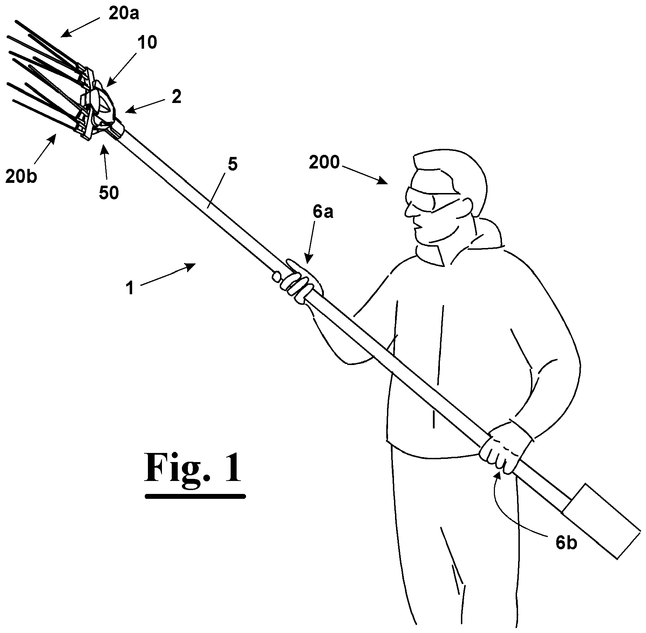

As diagrammatically shown in figure 1, an apparatus 1, according to the invention, for harvesting small fruits, in particular olives, almonds, pistachios, and similar fruits, comprises a manoeuvring pole 5 provided with at least a handle portion 6, for example a first and a second handle portion 6a and 6b, in order to be grasped by a user 200. According to a known embodiment, the manoeuvring pole 5 can have a telescopic arrangement formed by two or more sections, which are telescopically arranged one with respect to the other.

The apparatus 1 comprises, furthermore, a working head 2 having a support body 10, or protection carter, to which a first and a second oscillating comb-like member 20a and 20b are connected to. In particular, the first and second oscillating comb-like members 20a and 20b are positioned in the space in such a way to have a respective first end 21a and 21b facing one another.

In particular, the first and second oscillating comb-like members 20a and 20b are pivotally connected to the support body 10 at respective fulcrum points 23a and 23b. More precisely, the first and second oscillating comb-like members 20a and 20b are positioned side by side and comprise, respectively, a first and a second elongated base portion 30a and 30b provided, respectively, with a first and a second plurality of rods 35a and 35b. A motor group 50 is, furthermore, provided comprising, for example, a brushless motor, operatively connected to the first and second oscillating comb-like members 20a and 20b by a motion transmission group 60. This, according to the invention, comprises a first and a second connecting rod member 61a and 61b having a respective first end 62a and 62b pivotally connected to a respective end portion 31a and 31b of one of the two elongated base portions 30a and 30b, and a respective second end 62 and 62b arranged to connect the first and the second connecting rod member 61a and 61b to a first and a second crank group 65a and 65b, respectively.

In particular, the first crank group 65a (as shown as an example in the figures from 1 to 5) or, alternatively, the second crank group 65b, is operatively connected to the motor group 50, and is configured to cause the other crank group 65b, or 65a, to rotate, in particular in such a way that the two crank groups 65a and 65b are counter-rotating.

The technical solution provided by the invention, allows, on the one hand, to reduce the thickness of the support body 10 of apparatus 1, and, therefore, to allow the user, with respect to the prior art solutions, and in particular EP3430883, to have a better view during working conditions and, on the other hand, to have an accurate and reliable transmission with respect to the aforementioned technical solution of EP3430883 which provides to use two superimposed connecting rods hinged to the same eccentric pivot.

According to a preferred embodiment, the first and the second crank group 65a and 65b are configured to mesh with each other.

In particular, the motor group 50 is provided with a motor shaft 51 on which is mounted a pinion 52. This is arranged to directly mesh with a first gear wheel 64a of the first crank group 65a in order to directly transmit the rotational motion of the motor shaft 51 and, therefore, the oscillating motion to the first comb-like member 30a by the first connecting rod member 61a. The first gear wheel 64a is, furthermore, arranged to mesh with a second gear wheel 64b of the second crank group 65b in such a way to transmit the rotational motion to the same but in the opposite direction of rotation, and, therefore, the oscillating motion also to the second comb-like member 30b by the second connecting rod member 61b.

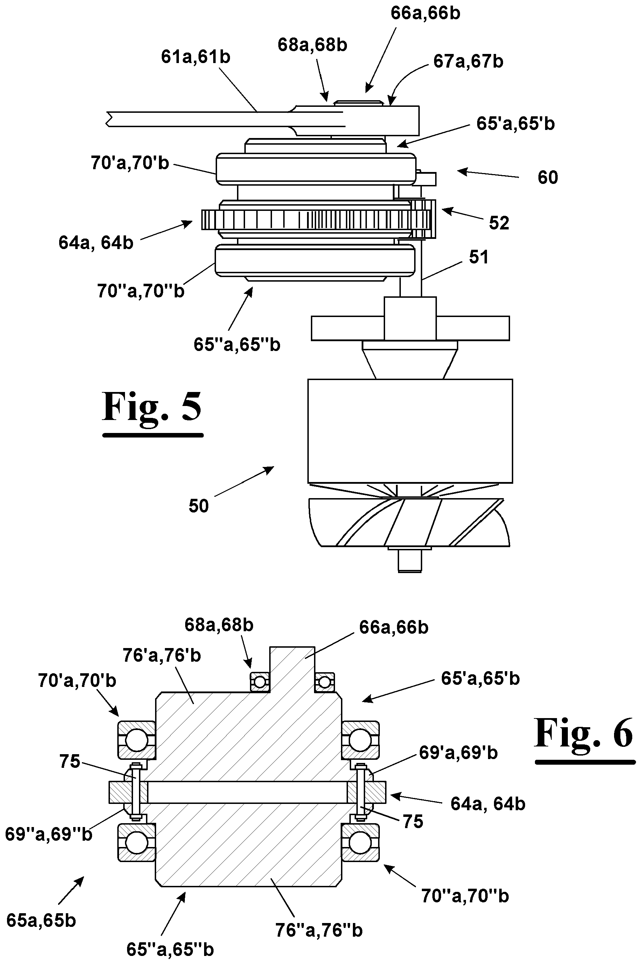

According to a possible embodiment of the invention that is diagrammatically shown in the figures from 5 to 7, the first and second crank groups 65a and 65b comprise a respective first part 65'a and 65'b, and a respective second part 65"a and 65"b, advantageously, fixed at opposite sides to the first and to the second gear wheel 64a and 64b. In particular, still with reference to figure 5, the first parts 65'a and 65'b are, respectively, provided with first and second eccentric pivots 66a and 66b. In particular, the first parts 65'a, 65'b are arranged to engage the respective second parts 65"a, 65"b at respective flange portions 69'a, 69'b and 69"a, 69"b, advantageously by fixing members 75 as for example screws, bolts, or similar fixing members (see figure 6).

As diagrammatically shown, for example, in figure 6, both the first and the second parts 65'a, 65'b and 65"a, 65"b are configured to prevent dust, or other external impurities, from penetrating between the different parts of the first and of the second crank group 65a and 65b. In particular, both the first and the second parts 65'a, 65'b and 65"a, 65"b are configured to form a respective closed body. However, the possibility is also provided that the aforementioned closed bodies are provided with grooves, or recessed portions, not shown in the figures for simplicity, in order to lighten the component without departing from the inventive concept described above. In this way, differently from the prior art solutions and in particular from that of GR1008857, it is possible to reduce the number of maintenance operations that are necessary to guarantee that the apparatus 1, and in particular the gear wheels 64a and 64b, are able to operate in the highest efficiency conditions. As diagrammatically shown in figure 6, for example, each of the aforementioned first and second parts 65'a, 65'b and 65"a, 65"b can comprise a respective flange portion 69'a, 69'b, 69"a, and 69"b from which a protruding portion 76'a, 76'b, 76"a, and 76"b, for example substantially cylindrical-shaped, or substantially conical-shaped, is arranged to protrude. In particular, the protruding portions 76'a, 76'b, 76"a, and 76"b have a width, or diameter, smaller than the respective flange portion 69'a, 69'b, 69"a, and 69"b.

Still with reference to the figures from 5 to 7, the first parts 65'a and 65'b and the second parts 65"a and 65"b of the crank groups 65a and 65b are associated to respective bearings 70'a and 70'b, and 70"a, 70"b. Advantageously, the bearings 70'a, 70'b and 70"a, 70"b can be positioned at opposite sides of the first and second gear wheels 64a and 64b with respect to a respective flange portion 69'a, 69'b and 69"a, 69"b of the first and second parts 65'a, 65'b and 65"a, 65"b.

More in particular, the first and the second crank group 65a and 65b are, respectively, provided with a first and a second eccentric pivot 66a and 66b, arranged to pivotally engage respectively into a first and into a second engagement hole 67a and 67b provided at the second ends 63a and 63b of the first and the second crank group 65a and 65b. Advantageously, the first parts 65'a, 65'b and 65"a, 65"b of the first and of the second crank group 65a and 65b are, respectively, provided with the first and the second eccentric pivot 66a and 66b.

According to the preferred embodiment that is diagrammatically shown in detail in the figures from 5 to 7, between the first and the second eccentric pivot 66a and 66b and the first and the second engagement hole 67a and 67b, a first and a second auxiliary bearing 68a and 68b are, respectively, provided.

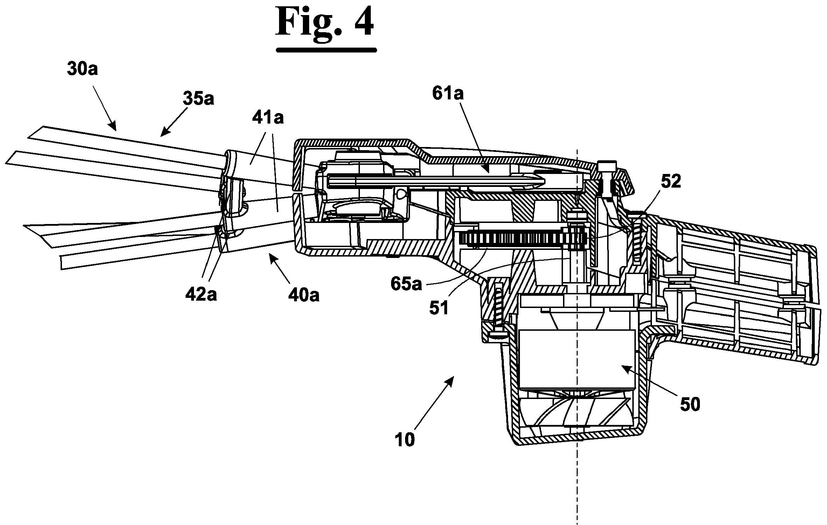

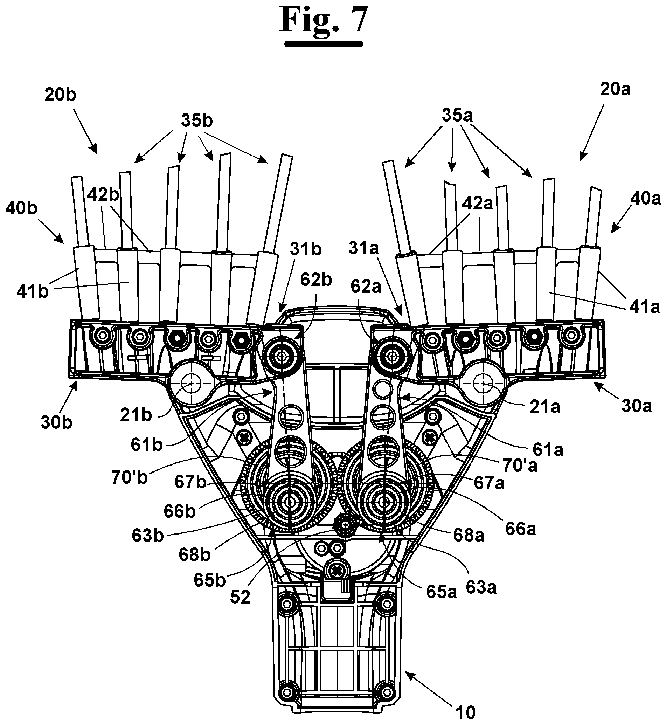

As shown for example in figure 7, according to an embodiment of the invention, the first and the second comb-like member 20a and 20b comprise, respectively, a first and a second directing body 40a and 40b. In particular, the first and the second directing body 40a and 40b can provide, respectively, a first and a second plurality of tubular bodies 41a and 41b. Advantageously, each tubular body 41a is connected to a following tubular body 41b, by a connection member 42a and 42b, in particular a connection rod, preferably a transversal connection rod. More precisely, each tubular body 41a and 41b is arranged to house and direct along a predetermined direction a respective rod 35a and 35b. As shown, for example, in figure 4, the first and the second plurality of tubular bodies 41a and 41b are arranged to be engaged, respectively, to the first and to the second oscillating comb-like member 20a and 20b, in particular at respective engagement openings 43a and 43b.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to carry out the different functions described herein could have a different nature without, for this reason, departing from the field of the invention. It is to be understood that the phraseology or terminology employed herein is for the purpose of description and not of limitation.

## Claims

1. An apparatus (1) for harvesting small fruits, in particular olives, almonds, pistachios and similar fruits, said apparatus (1) comprising:
- a handle portion (5) at which a user is arranged to grasp said apparatus (1);
- a support body (10);
- a first and a second oscillating comb-like member (20a,20b) pivotally connected to said support body (10) at respective fulcrum points (23a,23b), said first and said second oscillating comb-like member (20a,20b) being positioned side by side and comprising, respectively, a first and a second elongated base portion (30a,30b) provided, respectively, with a first and a second plurality of rods (35a,35b);
- a motor group (50) comprising a motor shaft (51) on which a pinion (52) is mounted operatively connected to said first and to said second oscillating comb-like member (20a,20b) by a motion transmission group (60) comprising a first and a second connecting rod member (61a,61b) having a respective first end (62a,62b) pivotally connected to a respective end portion (31a,31b) of said elongated base portion (30a,30b) and a respective second end (63a,63b) arranged to connect said first and said second connecting rod member (61a,61b), respectively, to a first and to a second crank group (65a,65b) comprising, respectively, a first and a second gear wheel (64a,64b) arranged to mesh one with the other in such a way to be counter-rotating; said apparatus (1) being **characterized in that** said pinion (52) is arranged to directly mesh with said first gear wheel of said first crank group (65a).

2. Apparatus (1) for harvesting small fruits according to claim 1, wherein said first ends (31a,31b) of said first and second elongated base portions (30a,30b) are configured to face one another.

3. Apparatus (1) for harvesting small fruits according to any of the previous claims, wherein said first and said second crank group (65a,65b) are respectively provided with a first and a second eccentric pivot (66a,66b) arranged to pivotally engage, respectively, into a first and into a second engagement hole (67a,67b) provided at said second ends (63a,63b) of said first and of said second crank group (65a,65b) respectively.

4. Apparatus (1) for harvesting small fruits according to claim 3, wherein between said first and said second eccentric pivot (66a,66b) and said first and said second engagement hole (67a,67b) a first and a second auxiliary bearing (68a,68b) are, respectively, provided.

5. Apparatus (1) for harvesting small fruits according to any of the previous claims wherein each of said first and of said second crank group (65a,65b) comprises a first part (65'a,65'b) and a second part (65"a,65"b) fixed at opposite sides to said first and to said second gear wheel (64a,64b).

6. Apparatus (1) for harvesting small fruits according to claim 5 wherein said first parts (65'a,65'b) and said second parts (65"a,65"b) are fixed at opposite sides respectively to said first and to said second gear wheel (64a,64b) by a plurality of fixing members (75).

7. Apparatus (1) for harvesting small fruits according to claim 5, or 6 wherein each said first part (65'a,65'b) is connected to said respective second part (65"a,65"b) of said first and second crank groups (65a,65b) at respective flange portions (69'a,69'b;69"a,69"b).

8. Apparatus (1) for harvesting small fruits according to any claim from 5 to 7 wherein each first and second part (65'a,65'b; 65"a,65"b) is a closed body configured to prevent dust, or other external impurities, from penetrating between the different parts of said first and second crank groups (65a,65b).

9. Apparatus (1) for harvesting small fruits according to any claim from 5 to 8 wherein each first and second part (65'a,65'b; 65"a,65"b) comprises a respective flange portion (69'a,69'b;69"a,69"b) from which a substantially conical-shaped, or cylindrical-shaped, protruding portion (76'a,76'b;76"a,76"b) protrudes.

10. Apparatus (1) for harvesting small fruits according to claim 9 wherein said protruding portions (76'a,76'b;76"a,76"b) have a diameter, or width, smaller than the diameter, or width, of the respective flange portions (69'a,69'b;69"a,69"b).

11. Apparatus (1) for harvesting small fruits according to any claim from 5 to 10, wherein said first parts (65'a,65'b) and said second parts (65"a,65"b) of said first and second crank groups (65a,65b) are associated to respective bearings (70'a,70'b; 70"a,70"b).

12. Apparatus (1) for harvesting small fruits according to claim 11, wherein said bearings (70'a,70'b; 70"a,70"b) are positioned at opposite sides of said first and second gear wheels (64a,64b) with respect to a respective flange portion (69'a,69'b;69"a,69"b) of said first and second parts (65'a,65'b; 65"a,65"b).

13. Apparatus (1) for harvesting small fruits according to claim 8 wherein said first parts (65'a,65'b; 65"a,65"b) of said first and second crank groups (65a,65b) are respectively provided with said first and said second eccentric pivot (66a,66b).

14. Apparatus (1) for harvesting small fruits according to any of the previous claims, wherein said first and second oscillating comb-like members (20a,20b) comprise, respectively, a first and a second directing body (40a,40b) comprising, respectively, a first and a second plurality of tubular bodies (41a,41b) operatively connected by a plurality of connection rods (42a,42b), each tubular body (41a,41b) being arranged to house and direct along a predetermined direction a respective rod (35a,35b), said first and second pluralities of tubular bodies (41a,41b) being arranged to be engaged, respectively, to said first and to said second oscillating comb-like member (20a,20b).

## Patentansprüche

1. Vorrichtung (1) zum Ernten von kleinen Früchten, insbesondere Oliven, Mandeln, Pistazien und ähnlichen Früchten, wobei die Vorrichtung (1) Folgendes umfasst:
- einen Griffabschnitt (5), an dem ein Benutzer angeordnet ist, um die Vorrichtung (1) zu greifen;
- einen Stützkörper (10);
- ein erstes und ein zweites oszillierendes kammartiges Element (20a, 20b), die schwenkbar mit dem Stützkörper (10) an jeweiligen Drehpunkten (23a, 23b) verbunden sind, wobei das erste und das zweite oszillierende kammartige Element (20a, 20b) Seite an Seite positioniert sind und jeweils einen ersten und einen zweiten länglichen Basisabschnitt (30a, 30b) umfassen, die jeweils mit einer ersten und einer zweiten Vielzahl von Stangen (35a, 35b) bereitgestellt sind;
- eine Motorgruppe (50), die eine Motorwelle (51) umfasst, auf der ein Ritzel (52) montiert ist, das mit dem ersten und mit dem zweiten oszillierenden kammartigen Element (20a, 20b) durch eine Bewegungsübertragungsgruppe (60) wirkverbunden ist, die ein erstes und ein zweites Verbindungsstangenelement (61a, 61b) umfasst, die ein jeweiliges erstes Ende (62a, 62b), das schwenkbar mit einem jeweiligen Endabschnitt (31a, 31b) des länglichen Basisabschnittes (30a, 30b) verbunden ist, und ein jeweiliges zweites Ende (63a, 63b) aufweist, das angeordnet ist, um das erste und das zweite Verbindungsstangenelement (61a, 61b) jeweils mit einer ersten und mit einer zweiten Kurbelgruppe (65a, 65b) zu verbinden, die jeweils ein erstes und ein zweites Zahnrad (64a, 64b) umfasst, die angeordnet sind, um auf eine solche Weise miteinander zu kämmen, dass sie gegenläufig sind;
wobei die Vorrichtung (1) **dadurch gekennzeichnet ist, dass** das Ritzel (52) angeordnet ist, um direkt mit dem ersten Zahnrad der ersten Kurbelgruppe (65a) zu kämmen.

2. Vorrichtung (1) zum Ernten von kleinen Früchten nach Anspruch 1, wobei die ersten Enden (31a, 31b) des ersten und des zweiten länglichen Basisabschnittes (30a, 30b) konfiguriert sind, um einander zugewandt zu sein.

3. Vorrichtung (1) zum Ernten von kleinen Früchten nach einem der vorhergehenden Ansprüche, wobei die erste und die zweite Kurbelgruppe (65a, 65b) jeweils mit einem ersten und einem zweiten Exzenterzapfen (66a, 66b) bereitgestellt sind, die angeordnet sind, um schwenkbar jeweils in ein erstes und in ein zweites Eingriffsloch (67a, 67b) einzugreifen, die jeweils an den zweiten Enden (63a, 63b) der ersten und der zweiten Kurbelgruppe (65a, 65b) bereitgestellt sind.

4. Vorrichtung (1) zum Ernten von kleinen Früchten nach Anspruch 3, wobei zwischen dem ersten und dem zweiten Exzenterzapfen (66a, 66b) und dem ersten und dem zweiten Eingriffsloch (67a, 67b) jeweils ein erstes und ein zweites Hilfslager (68a, 68b) bereitgestellt sind.

5. Vorrichtung (1) zum Ernten von kleinen Früchten nach einem der vorhergehenden Ansprüche, wobei jede von der ersten und der zweiten Kurbelgruppe (65a, 65b) einen ersten Teil (65'a, 65'b) und einen zweiten Teil (65"a, 65"b) umfasst, die an gegenüberliegenden Seiten an dem ersten und an dem zweiten Zahnrad (64a, 64b) befestigt sind.

6. Vorrichtung (1) zum Ernten von kleinen Früchten nach Anspruch 5, wobei die ersten Teile (65'a, 65'b) und die zweiten Teile (65"a, 65"b) an gegenüberliegenden Seiten jeweils an dem ersten und an dem zweiten Zahnrad (64a, 64b) durch eine Vielzahl von Befestigungselementen (75) befestigt sind.

7. Vorrichtung (1) zum Ernten von kleinen Früchten nach Anspruch 5 oder 6, wobei jeder erste Teil (65'a, 65'b) mit dem jeweiligen zweiten Teil (65"a, 65"b) der ersten und der zweiten Kurbelgruppe (65a, 65b) an jeweiligen Flanschabschnitten (69'a, 69'b; 69"a, 69"b) verbunden ist.

8. Vorrichtung (1) zum Ernten von kleinen Früchten nach einem Anspruch von 5 bis 7, wobei jeder erste und zweite Teil (65'a, 65'b; 65"a, 65"b) ein geschlossener Körper ist, der konfiguriert ist, um zu verhindern, dass Staub oder andere äußere Verunreinigungen zwischen die verschiedenen Teile der ersten und der zweiten Kurbelgruppe (65a, 65b) eindringen.

9. Vorrichtung (1) zum Ernten von kleinen Früchten nach einem Anspruch von 5 bis 8, wobei jeder erste und zweite Teil (65'a, 65'b; 65"a, 65"b) einen jeweiligen Flanschabschnitt (69'a, 69'b; 69"a, 69"b) umfasst, von dem ein im Wesentlichen konisch geformter oder zylindrisch geformter hervorstehender Abschnitt (76'a, 76'b; 76"a, 76"b) hervorsteht.

10. Vorrichtung (1) zum Ernten von kleinen Früchten nach Anspruch 9, wobei die hervorstehenden Abschnitte (76'a, 76'b; 76"a, 76"b) einen Durchmesser oder eine Breite aufweisen, die kleiner als der Durchmesser oder die Breite der jeweiligen Flanschabschnitte (69'a, 69'b; 69"a, 69"b) ist.

11. Vorrichtung (1) zum Ernten von kleinen Früchten nach einem Anspruch von 5 bis 10, wobei die ersten Teile (65'a, 65'b) und die zweiten Teile (65"a, 65"b) der ersten und der zweiten Kurbelgruppe (65a, 65b) jeweiligen Lagern (70'a, 70'b; 70"a, 70"b) zugeordnet sind.

12. Vorrichtung (1) zum Ernten von kleinen Früchten nach Anspruch 11, wobei die Lager (70'a, 70'b; 70"a, 70"b) an gegenüberliegenden Seiten des ersten und des zweiten Zahnrads (64a, 64b) in Bezug auf einen jeweiligen Flanschabschnitt (69'a, 69'b; 69"a, 69"b) der ersten und der zweiten Teile (65'a, 65'; 65"a, 65"b) positioniert sind.

13. Vorrichtung (1) zum Ernten von kleinen Früchten nach Anspruch 8, wobei die ersten Teile (65'a, 65'b; 65"a, 65"b) der ersten und der zweiten Kurbelgruppe (65a, 65b) jeweils mit dem ersten und dem zweiten Exzenterzapfen (66a, 66b) bereitgestellt sind.

14. Vorrichtung (1) zum Ernten von kleinen Früchten nach einem der vorhergehenden Ansprüche, wobei das erste und das zweite oszillierende kammartige Element (20a, 20b) jeweils einen ersten und einen zweiten Führungskörper (40a, 40b) umfassen, die jeweils eine erste und eine zweite Vielzahl von röhrenförmigen Körpern (41a, 41b) umfassen, die durch eine Vielzahl von Verbindungsstangen (42a, 42b) wirkverbunden sind, wobei jeder röhrenförmige Körper (41a, 41b) angeordnet ist, um eine jeweilige Stange (35a, 35b) aufzunehmen und entlang einer vorbestimmten Richtung zu führen, wobei die erste und die zweite Vielzahl von röhrenförmigen Körpern (41a, 41b) angeordnet sind, um jeweils mit dem ersten und mit dem zweiten oszillierenden kammartigen Element (20a, 20b) in Eingriff zu sein.

## Revendications

1. Appareil (1) pour récolter des petits fruits, notamment des olives, des amandes, des pistaches et des fruits similaires, ledit appareil (1) comprenant :
- une partie poignée (5) au niveau de laquelle un utilisateur est agencé pour tenir ledit appareil (1) ;
- un corps de support (10) ;
- un premier et un second élément en forme de peigne oscillant (20a, 20b) reliés de manière pivotante audit corps de support (10) au niveau de points d'appui respectifs (23a, 23b), lesdits premier et second éléments en forme de peigne oscillant (20a, 20b) étant positionnés côte à côte et comprenant, respectivement, une première et une seconde parties de base allongées (30a, 30b) dotées, respectivement, d'une première et d'une seconde pluralité de tiges (35a, 35b) ;
- un groupe moteur (50) comprenant un arbre moteur (51) sur lequel est monté un pignon (52) relié fonctionnellement audit premier et audit second éléments en forme de peigne oscillant (20a, 20b) par un groupe de transmission de mouvement (60) comprenant un premier et un deuxième éléments de tige (61a, 61b) comportant une première extrémité respective (62a, 62b) reliée de manière pivotante à une partie d'extrémité respective (31a, 31b) de ladite partie de base allongée (30a, 30b) et une seconde extrémité respective (63a, 63b) agencée pour relier ledit premier et ledit deuxième élément de tige (61a, 61b), respectivement, à un premier et à un deuxième groupes de manivelles (65a, 65b) comprenant, respectivement, une première et une deuxième roues dentées (64a, 64b) disposées pour s'engrener l'une avec l'autre de manière à être contrarotatives ;
ledit appareil (1) étant **caractérisé en ce que** ledit pignon (52) est agencé pour s'engrener directement avec ladite première roue dentée dudit premier groupe de manivelles (65a).

2. Appareil (1) pour récolter des petits fruits selon la revendication 1, dans lequel lesdites premières extrémités (31a, 31b) desdites première et seconde parties de base allongées (30a, 30b) sont configurées pour se faire face.

3. Appareil (1) pour récolter des petits fruits selon l'une quelconque des revendications précédentes, dans lequel ledit premier et ledit deuxième groupes de manivelles (65a, 65b) sont respectivement pourvus d'un premier et d'un deuxième pivots excentriques (66a, 66b) agencés pour s'engager de manière pivotante, respectivement, dans un premier et dans un deuxième trous d'engagement (67a, 67b) prévus respectivement au niveau desdites secondes extrémités (63a, 63b) dudit premier et dudit deuxième groupes de manivelles (65a, 65b).

4. Appareil (1) pour récolter des petits fruits selon la revendication 3, dans lequel entre ledit premier et ledit deuxième pivot excentrique (66a, 66b) et ledit premier et ledit second trous d'engagement (67a, 67b), un premier et un second palier auxiliaire (68a, 68b) sont respectivement fournis.

5. Appareil (1) pour récolter des petits fruits selon l'une quelconque des revendications précédentes, dans lequel chacun dudit premier et dudit deuxième groupes de manivelles (65a, 65b) comprend une première partie (65'a, 65'b) et une seconde partie (65"a, 65"b) fixées sur les côtés opposés à ladite première et ladite seconde roues dentées (64a, 64b).

6. Appareil (1) pour récolter des petits fruits selon la revendication 5, dans lequel lesdites premières parties (65'a, 65'b) et lesdites secondes parties (65"a, 65"b) sont fixées sur des côtés opposés respectivement à ladite première et ladite seconde roues dentées (64a, 64b) par une pluralité d'éléments de fixation (75).

7. Appareil (1) pour récolter des petits fruits selon la revendication 5 ou 6, dans lequel chaque dite première partie (65'a, 65'b) est reliée à ladite seconde partie respective (65"a, 65"b) desdits premier et deuxième groupes de manivelles (65a, 65b) au niveau des parties de bride respectives (69'a, 69'b ; 69"a, 69"b).

8. Appareil (1) pour récolter des petits fruits selon l'une quelconque des revendications 5 à 7, dans lequel chaque première et seconde parties (65'a, 65'b ; 65"a, 65"b) est un corps fermé configuré pour empêcher la poussière, ou d'autres impuretés externes, de pénétrer entre les différentes parties desdits premier et deuxième groupes de manivelles (65a, 65b).

9. Appareil (1) pour récolter des petits fruits selon l'une quelconque des revendications 5 à 8, dans lequel chaque première et seconde parties (65'a, 65'b ; 65"a, 65"b) comprend une partie de bride respective (69'a, 69'b; 69"a, 69"b) à partir de laquelle une partie saillante de forme sensiblement conique ou cylindrique (76'a, 76'b ; 76"a, 76"b) dépasse.

10. Appareil (1) pour récolter des petits fruits selon la revendication 9, dans lequel lesdites parties saillantes (76'a, 76'b ; 76"a, 76"b) comportent un diamètre ou une largeur inférieur au diamètre ou à la largeur des parties de bride respectives (69'a, 69'b ; 69"a, 69"b).

11. Appareil (1) pour récolter des petits fruits selon l'une quelconque des revendications 5 à 10, dans lequel lesdites premières parties (65'a, 65'b) et lesdites secondes parties (65"a, 65"b) desdits premier et deuxième groupes de manivelles (65a, 65b) sont associées à des roulements respectifs (70'a, 70'b ; 70"a, 70"b).

12. Appareil (1) pour récolter des petits fruits selon la revendication 11, dans lequel lesdits roulements (70'a, 70'b ; 70"a, 70"b) sont positionnés sur les côtés opposés desdites première et seconde roues dentées (64a, 64b) par rapport à une partie de bride respective (69'a, 69'b ; 69"a, 69"b) desdites première et seconde parties (65'a, 65'b ; 65"a, 65"b).

13. Appareil (1) pour récolter des petits fruits selon la revendication 8, dans lequel lesdites premières parties (65'a, 65'b ; 65"a, 65"b) desdits premier et deuxième groupes de manivelles (65a, 65b) sont respectivement dotées dudit premier et dudit deuxième pivots excentriques (66a, 66b).

14. Appareil (1) pour récolter des petits fruits selon l'une quelconque des revendications précédentes, dans lequel lesdits premier et second éléments en forme de peigne oscillant (20a, 20b) comprennent, respectivement, un premier et un second corps directeurs (40a, 40b) comprenant, respectivement, une première et une seconde pluralité de corps tubulaires (41a, 41b) reliés fonctionnellement par une pluralité de bielles de connexion (42a, 42b), chaque corps tubulaire (41a, 41b) étant agencé pour loger et diriger le long d'une direction prédéterminée une tige respective (35a, 35b), lesdites première et seconde pluralités de corps tubulaires (41a, 41b) étant agencés pour venir en prise, respectivement, avec ledit premier et ledit second éléments en forme de peigne oscillant (20a, 20b).
